# EUROPEAN PATENT APPLICATION

(11) **EP 2 388 641 A1**
(43) Date of publication of application: **23.11.2011**
(21) Application number: 10005280.2
(22) Date of filing: 20.05.2010
(51) Int. Cl.: G02F 1/13357, G02B 5/08, F21V 7/22, C08J 5/18

(54) **Reflecting films obtained by solvent casting and their use**

(71) Applicant: LOFO High Tech Film GmbH, 79576 Weil am Rhein (DE)
(72) Inventor: Wu, Jeffrey H., 79576 Weil am Rhein (DE); Goebel, Sabine, 79650 Schopfheim (DE)
(74) Representative: Maucher, Wolfgang

(57) **Abstract**

The invention relates to the use of a solvent-cast manufactured film as reflector in a surface light source in the form of a back light unit (BLU) for a liquid crystal display (LCD) including a Thin Film Transistor (TFT) display, a Liquid Crystal Display (LCD) comprising as light reflector such a solvent-cast manufactured film, a backlight system, comprising as light reflector such a solvent-cast manufactured film, such a solvent-cast manufactured film comprising a silver and/or white pigment, and a process for the manufacture of a backlight unit comprising forming a film by solvent casting with a solution comprising the basis material, one or more pigments (reflective materials) and if desired one or more further additives, such as plasticizers, and then using the film and other components required to manufacture the backlight unit.

## Description

### Field of the invention:

The invention relates to a film useful as reflector in a surface light source in the form of a back light unit for a liquid crystal display (LCD) and comparable applications.

### Background of the invention

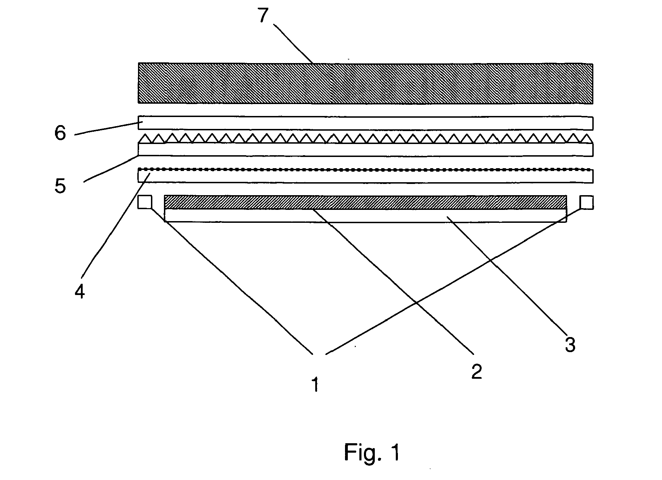

Backlight units are available in various forms with various component parts, for example as normal LCD designs which may have (from bottom to top) a reflector sheet, then cold cathode Fluorescence Lamps (CCFL), then a diffuser plate and various film stacks e.g. 2 diffusers, then Dual Brightness Enhancing Films (DBEF) (for recycling most of the light that is normally lost in the rear polarizer) and then the LCD cell. Alternatively, slim LCD designs are possible where (again from bottom to top) a reflector sheet, then CCFL lamps, then a patterned diffuser plate, then a diffuser, then a multifunctional film and then the LCD cells are provided in parallel to each other. Recently, Super Slim LCD Design with Light Emitting Diodes (LED) instead of CCFL as light source have become of interest in which the light is (see Fig. 1) entered from lateral LEDs **1** through a light guide **2** situated on a reflector sheet **3,** then a diffuser **4** and an optional patterned diffuser plate **5** may follow with a and then a polarization recycling film (DBEF) **6,** together forming the (here edge light) backlight unit onto which the LCD cell **7** (and optionally further layers) is (are) placed. The thickness of these Super Slim LDC Designs is e.g. in the range of 8 to 12 mm or less, thus allowing for very light and thin displays.

Corresponding films known in the art are produced by extrusion processes. Examples are the films without the need of incorporating a filler on polyolefin basis but requiring stretching in WO 2008/123045, or films on polyester basis such as those described in US 5,672,409 with fine voids which also require stretching. Other, more complicated devices include a polymer dispersed liquid crystal comprising film in the form of an active transflective device as described in EP 2 161 613.

Due to the use of extrusion methods, a challenge is that, where pigments are to be added, only limited amounts are possible, as otherwise the material is too abrasive and limits the use of extrusion apparatus.

In addition, often stretching is required as a step in order to ensure e.g. the formation of voids.

Also, the use of polyesters (e.g. polyethylene terephthalate polyesters = PET) can limit the compatibility with adjacent layers.

Also cheaper and more flexible materials are desirable.

Further, the use of PET requires the addition of a UV coating in order to prevent deterioration of base material.

### General description of the invention

It has now been found that films obtainable by solvent casting e.g. on cellulose acylate basis allow for improvements addressing the issues mentioned before and allowing for a number of advantages previously not encountered.

Thus, in contrast to extrusion required for PET films, there is no challenge to add pigments in particle form in higher amounts - no tear and wear of extrusion devices for extruded films used in the prior art can be encountered. Thus pigments can be added in even higher amounts than in the prior art as the risk of damaging extrusion devices is not given.

In addition, in contrast to prior art on PET basis no mono- or bidirectional stretching is required.

Material that is incompatible with PET can be used as such and thus new possibilities for combinations with other films are possible.

In addition, the casting process allows for high flexibility regarding the ingredients and for the manufacture at reasonable economic cost.

The reproducibility is high and a UV coating (avoiding a yellow appearance of the film) is not required as was in the case of PET where the yellow appearance had to be prevented by such a coating.

In addition, indices of whiteness can be achieved that are at least as good as those in the case of the prior art films.

Another advantage is that the side of the cast film which is not in contact to the flat material (e.g. steel band) onto which the casting takes place can be distinguished easily from the side which came into contact with the flat material, for example because of a higher glossiness of the free side.

In addition, high amounts of pigment material may be incorporated into the film material without leading to an undesirable brittleness.

Yet further, the films used in and according to the present invention show high thermal stability and, due to their isotropic and homogenous character, good dimensional stability.

### Detailed Description of the Invention

In a first embodiment, the invention therefore relates to the use of a solvent-cast manufactured film as reflector (which can also be called "solvent-cast manufactured reflector sheet" throughout the present disclosure), especially as described above or below, in a surface light source in the form of a back light unit (BLU) for a liquid crystal display (LCD), this term including a Thin Film Transistor (TFT) display or a Supertwisted Nematic (STN).

In a second embodiment, the invention relates to a Liquid Crystal Display (LCD) comprising as light reflector a solvent-cast manufactured film, especially as defined above or below.

In a third embodiment, the invention relates to a backlight system, comprising as light reflector a solvent-cast manufactured film, especially as defined above and below, and a light source the light of which is reflected diffusely by said film, especially a three-dimensional or two-dimensional (plane) light source on one side of which the film is attached (e.g. in the form of a light guide sheet). The backlight system can especially comprise as two-dimensional light source an edge light source, where the light reflector in the form of the solvent-cast manufactured film covers one two-dimensional side of the edge light system.

In a fourth embodiment, the invention relates to a solvent-cast manufactured film, especially as described hereinabove or below, comprising a silver and/or white pigment.

In a fifth embodiment, the invention relates to a process for the manufacture of a backlight unit comprising forming a film by solvent casting with a solution comprising the basis material, one or more pigments (reflective materials) and if desired one or more further additives, such as plasticizers, and then using the film and other components required to manufacture the backlight unit.

### Description of the Figure (which show particular embodiments of the invention):

**Fig. 1** schematically shows a Super Slim LCD Design e.g. with Light Emitting Diodes (LED) instead of CCFL as light source and an edge light backlight unit.
**Fig. 2** shows the reflectance of a sample of a solvent-cast manufactured reflector sheet according to the invention (see Example 3), both on the matte and the glossy side of the film, the curves being so close to each other that they overlap.
**Fig. 3** shows the reflectance of a sample of a commercially available PET film obtained by extrusion (see Example 3).
**Fig. 4 a), 4 b), 4 c) and 4 d)** show various embodiments of backlight designs in a schematic way. (see US 7,229,194 B2)

### Definitions and Particular Embodiments of the Invention

The following definitions can be inserted instead of the more general expressions used above and below individually or by two or more or all in order to arrive at more specific, e.g. preferred, embodiments of the invention and thus define such particular embodiments.

A solvent (or soluent) cast-manufactured film is a film that has a soluble polymeric material, such as acyl-cellulose, preferably tri-acyl-cellulose, as basis material (the film forming material). The thickness of a dried film according to the invention or used in the invention can, e.g., be in the range from about 10 µm to about 350 µm, e.g. from about 50 to about 250 µm, such as from 125 to 200 µm or from about 150 to about 300 µm. Acyl-cellulose (or cellulose acylate) means especially a cellulose-triacylate in which the acyl moieties may be identical or (specially stochastically) different from each other, especially a cellulose-tri-C₁-C₇-alkanoate, more especially a cellulose-C₁-C₄-alkanoate, such as cellulose butyrate, -propionate and/or -acetate, such as especially CAP (cellulose acetopropionate), cellulose acetate butyrate or TAC (cellulose triacetate or "triacetyl-cellulose").

Preferably the degree of acyl substitution, which is the number of acyl moieties bound per cellulose unit (mono-saccharide unit with 6 carbon atoms), is from about 2,4 to about 3, especially from 2,70 to 2,98.

For example, in triacetyl-cellulose the cellulose acetate preferably has an acetic acid content between 59.0 and 62.5 %, more preferably between 59.5 to 61.5 % . The term "acetic acid content" refers to the weight of the bound acetic acid per C₆ unit of cellulose. The experimental determination can be done e.g. according to ASTM: D-817-91 ("Tests of Cellulose Acetate") or corresponding protocols. If not mentioned otherwise, the acetic acid content values given above and below refer to values obtained according to ASTM: D-817-91.

The polymolecularity (ratio of weight average molecular weight M_{w} to number average molecular weight Mₙ), also called polydispersity, of the cellulose acylates for films according to the invention can, for example, be in the range from about 1.5 to about 7, e.g. from 2 to 5.

The molecular weight can here be determined with chloroform or methylene chloride by gel permeation chromatography.

The weight share of the basis material, in completed films used in or according to the invention, preferably lies in the range from about 50 to about 96 weight %,, e.g. from about 50 to 90 weight %.

In addition, the film comprises one or more pigments (reflective materials) that allow to reflect light (preferably in a diffuse way), such as silver or especially white pigments. Such pigments may be selected from one or more materials selected from the group consisting of inorganic or organic white materials, especially white metal salts or oxides, such as zinc oxide (ZnO), barium titanate (BaTiO₃), lead titanate (PbTiO₃), lead zirconate/titanate (Pb(Zr,Ti)O₃), aluminium oxide (Al₂O₃), silica (SiO₂), barium oxide (BaO), strontium titanate (SrTiO₃) zinc sulfide (ZnS) and especially barium sulfate (BaSO₄), calcium carbonate (CaCO₃) or most especially titanium dioxide (TiO₂) or mixtures of two or more thereof.

The total weight share of pigments, if more than one pigment is used, in completed films used in or according to the invention, preferably lies in the range from about 3 to about 50 weight %, e.g. from about 4 to about 50 weight %, e.g. from 19 to about 45 weight %. If only one pigment is present, e.g. TiO₂, is weight share range lies in the range from about 3 to 39.5 weight %, e.g. from about 4 to 39 weight %, e.g. from 19 to 39 weight %.

The pigment preferably has a grain size in the range from about 0.25 µm to about 50 µm, more preferably in the range from 0.5 µm to 10 µm, e.g. in the range from 1 µm to 5 µm (meaning e.g. that at least 90 % by weight of the particles falls into this size range, respectively). Preferably the mentioned sizes are determined according to ISO 13333 17-3.

Due to the matte side of the material caused by a matte substrate during the solvent casting production process, it is possible, in preferred versions of the invention embodiments, to do without anti-blocking agents, though such materials also may be present, e.g. in an amount from 0.001 to 24 % by weight, referring to the completed solvent cast film. In addition, the presence of the matte side makes it possible to bring the film (sheet) manufactured by solvent casting on other plate or film materials in a backside unit into contact without causing optical issues, such as the formation of Newton rings or the like. Both sides of the films according to the invention can be used for lighting, in the case of extremely thin back light units the matte side may be preferred to prevent blocking with light guide plate.

In addition, usually plasticizers should also be present as additives, e.g. one or more plasticisers selected from the group consisting of aliphatic dicarbonic acid esters, e.g. dioctyl adipate, dicyclohexyl adipate or diphenylsuccinate, esters and/or carbamates of unsaturated or saturated ali- or heterocyclic di- or polycarbonic acids, such as di-2-naphthyl-1,4-cyclohexandicarboxylate, tricyclohexyltricarbamate, tetra-3-methylphenyltetrahydrofuran-2,3,4,5-tetracarboxylate, tetrabutyl-1,2,3,4-cyclopentantetracarboxylate, triphenyl-1,3,5-cyclohexyltricarboxylate, di(isononyl) cyclohexane-1,2-dicarboxylate (DINCH), triphenylbenzol-1,3,5-tetracarboxylate, phthalic acid based plasticizers such as diethyl-, dimethoxyethyl-, dimethyl-, dioctyl-, dibutyl-, di-2-ethylhexyl- or dicyclo-hexylphthalate, bis(2-propylheptyl)phthalate, dicyclohexylterephthalate, methylphthalylmethylglykolate, ethylphthalyl-ethylglykolate, propylphthalyl-propylglykolate, butylphthalylbutylglykolate, glycerol esters, e.g. glycerol triacetate, citric acid based plasticizers, e.g. acetyltrimethylcitrate, acetyltriethylcitrate or acetylbutylcitrate, polyether based plasticizers, or preferably (e.g. due to improved effectivity for the use according to the invention, but also with regard to eco-friendliness and good processability, phosphoric acid based plasticizers, such as triphenyl phosphate (TPP) (very preferred), trikresyl phosphate, biphenyldiphenyl phosphate, butylenbis(diethyl phosphate), ethylen-bis(diphenyl phosphate), phenylen-bis(dibutyl phosphate), phenylen-bis(diphenyl phosphate), phenylen-bis(dixylenyl phosphate), bisphenol A-diphenyl phosphate, diphenyl-(2-ethylhexyl)-phosphate, octyldiphenyl phosphate or triethylphosphate.

The plasticizers are preferably present in an amount of 0.5 to 25 weight %, referring to the weight of the completed film used in or according to the invention, more preferably in an amount from 1 to 22 weight %, e.g. from 5 to 15 weight %.

A film used in or according to the invention can contain one or more further additives (added e.g. during the production of the solution or dispersion with the ingredients for the solvent casting process), such as dispersants, fluorescent materials, fillers, inorganic polymers, organic polymers, antifoaming agents, lubricants, antioxidants (such as hindered phenols, hindered amines, phosphorrus based antioxidants, sulfur based antioxidants, oxygen absorbers or the like), acid binders (e.g. diglycidyl ethers of poly glycols, metal oxides, epoxylated unsaturated fatty acids or plant oils, or the like), radical scavengers, materials for enhancing electric conductivity, thickening agents, bleachers, preservation agents, chemical stabilisators such as sterically hindered amines (e.g. 2,2,6,6-tetraalkyl piperidine) or phenols, infrared absorber, means for controlling the refractive index, gas barrier means, means lowering water permeability, antimicrobial agents, anti-blocking agents, such as semiconductor or metal oxides, e.g. silica, kaolin, calcinated calcium silicate, hydrated calcium silicate, aluminium silicate, magnesium silicate or calcium phosphate, or mixtures of two or more such additives.

The further additives, taken all together, if present at all, can, for example, be present in an amount of 0.01 to 25 weight %, e.g. from 0.1 to 15 weight %.

Preferably, these further additives are colorless and do not disturb or do even support the reflectance of light from the films used in or according to the invention.

Where "about" is used in connection with upper or lower limits of numerical ranges or numbers, this means that the corresponding number can in particular deviate by ± 20, more particularly by ± 10 % from the given numerical value. Alternatively is can mean that the value is exact. Where "about" is not used, the respective number is meant to be exact.

In the process for the manufacture of a backlight unit according to the invention, comprising forming a film by solvent casting with a solution comprising the basis material, one or more pigments (reflective materials) and if desired one or more further additives, such as plasticizers, and then using the film and other components required to manufacture the backlight unit, preferably the following process is employed for the manufacture of the solvent cast film of or for use in the invention:

First, for the preparation of the solvent-cast manufactured film of or used in the invention embodiments, the components of the film (at least one basis material and at least one pigment (reflective material) and optionally a plasticizer and optionally one or more further additives (preferably without any UV absorbing material)) are mixed with a solvent or solvent mixture to obtain a solution or dispersion. The sequence of addition of the components can vary - for example, the components can be added separately to parts of the solvent or solvent mixture that can then be united to form the complete mixture. Usually, the amount of solids in the final solution or dispersion can be in the range of from about 4 to about 50 % by weight of the complete solution or dispersion, e.g. in the range from about 20 to about 40 weight %. The solution or dispersion may be formed by supporting the distribution of the components therein by customary means, including heating and cooling cycles, stirring, pumping or ultrasound or combinations thereof.

The solution or dispersion obtained (called dope) is then spread on a (horizontally extended) substrate customary in solution casting (solvent casting), such as a metal band or drum, e.g. a steel band from stainless steel, preferably with a surface roughness defined as follows: profile roughness parameter R_{A} between 0,1 to 1,5 (arithmetic average of absolute values after measuring along a length of 5 mm, respectively, dragging a measurement stylus across the surface using a profilometer Marsurf PA1, Mahr GmbH, Göttingen, Germany, with inductive skidded pick-up, 2 µm stylus tip, measuring force approx. 0.7 mN). preferably in a solution casting apparatus or machine, followed by drying under controlled conditions (e.g. appropriate temperatures, for example in the range from about 0 °C to about 100 °C, e.g. from about 5 °C to about 42 °C, followed either by one or more additional steps of drying at elevated temperatures, e.g. from about 25 to about 130 °C, such as from about 50 to about 120 °C, and removal of the film formed from the substrate, or by first removing the film and then subjecting it to one or more additional drying steps at elevated temperatures, e.g. as just defined, or any other combination of the removal of the film and the additional drying steps, so that preferably the solvent content in the solvent-cast manufactured film useful in or according to the invention the amount of residual solvent is about 5 weight-% or lower, preferably 2 weight-% or lower, e.g. 1 weight-% or lower.

The method of solution casting is well known in the art, e.g. in US 2005/0045064 which is incorporated herein by reference regarding the method described therein as a possible example for the method.

As solvent or solvent mixture for the dope preferably cyclic or acyclic esters, ketones or ethers each with 3 to 12 carbon atoms, or customary halogenated (especially chloro substituted) solvents are possible, such as especially dichloromethane or chloroform, preferably in admixture with a linear, branched or cyclic alcohol, especially methanol, where the alcohol may also be fluorinated. Preferably a mixture from a chlorinated hydrocarbons, such as especially methylene chloride (dichloromethane), and an alcohol, especially methanol, is used. In the (preferred) case of mixtures of the mentioned non-alcoholic and alcoholic solvents the ratio of the non-alcoholic (e.g. dichloromethane) to alcoholic (e.g. methanol) solvent preferably lies in the range from about (75 to 25) to (95 to 1), e.g. 9 to 1.

The film thus obtained is a solvent-cast manufactured film according to or useful in the present invention. Where "solvent-cast manufactured film" is mentioned, this preferably refers to a film manufactured as just described.

This film can then be connected (e.g. by standard bonding methods, including welding (e.g. with lasers), adhesives, lamination or other techniques) to the other component parts of a backlight unit (see e.g. above in the introduction and in Fig. 1 where the film according to the invention corresponds to the reflector sheet 3, this word being applicable throughout the present disclosure where the "solvent-cast manufactured film" is mentioned) in including light sources and LCD cells and the like.

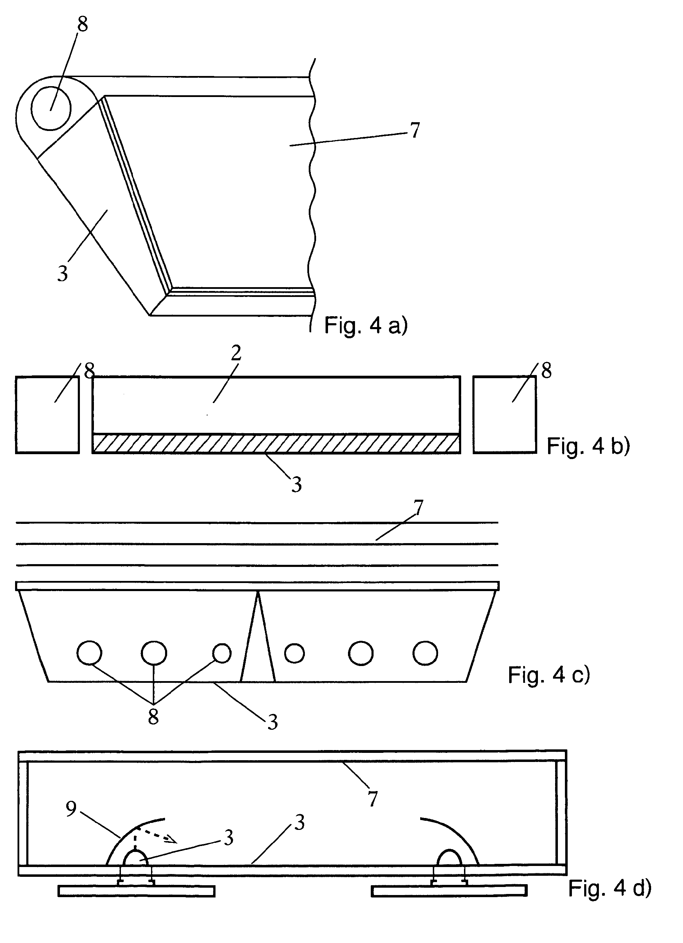

Various other designs are possible, e.g. as shown in Fig. 4a) to 4d) wherein **2** is a light guide, **3** a reflector sheet according to the invention, **7** and LCD cell, **8** a light source (e.g. LED or CCFL) and **9** a mirror element (e.g. parabolic to spread the light evenly), just to show some non-limiting possibilities of backlight devices that can be realized with a solvent-cast manufactured film as reflector sheet according to the invention. All such, as well as the design shown in Fig. 1, and any further designs for backlight units are therefore comprised in all embodiments of the present invention.

Preferred embodiments of the invention are defined in the following, also the Examples representing preferred embodiments.

Preferably, the reflectance measured according to a method described in Example 3 of a solvent-cast manufactured reflector sheet according to the invention is in the range of not less than 70 %, more preferably not less than 80 %, yet more preferably not less than 90 %, yet more preferably not less than 95 % in the wavelength range from 420 to 800 nm .
(a) Regarding the first embodiment of the invention mentioned above, the invention especially relates to a corresponding use where the solvent-cast manufactured film is equipped to allow for distribution of light from a back light source by diffuse reflection of light, that is, the solvent-cast manufactured reflector sheet according to the invention reflects light in a diffuse way.
(b) The invention more particularly relates to the use according to any one of the first embodiment and (a) above, where the solvent-cast manufactured film comprises one or more of a silver pigment, a white pigment, a fluorescent dye or pigment (e.g. in the form of semiconductor materials with appropriate doping) and/or voids (e.g. obtained by including a gas developing material or (less preferably) stretching the film into one or two dimensions) allowing for the diffuse reflection of light.
(c) In another particular embodiment, the invention relates to the use according to the first embodiment or paragraph (a) or (b) above where the solvent-cast manufactured film comprises a silver or (preferably) white pigment in particle form.
(d) In another embodiment of particularity of the invention, the latter relates to the use according to paragraph (c), where the pigment is titanium dioxide in particle form.
(e) Especially, the invention relates to the use according to any one of the first embodiment of the invention or paragraphs (a) to (d) above, where the solvent-cast manufactured film is not oriented axially (stretched) after the manufacture of the film by solvent-casting and peeling of the film from a substrate on which the solvent-casting takes place.
(f) In another particular embodiment, the invention relates to the use according to the first embodiment of the invention or any one of the preceding paragraphs (a) to (e) where light is applied by a back light source in the form of a side or edge light source, e.g. as shown in Fig. 1 or in Fig. 4 b).
(g) In yet another embodiment, the invention relates to the use according to the first embodiment of the invention or any one of the preceding paragraphs (a) to (f) where the solvent-cast manufactured film is a film comprising, as basis material, acyl-cellulose, especially a cellulose-triacylate in which the acyl moieties may be identical or (especially stochastically) different from each other, especially a cellulose-tri-C₁-C₇-alkanoate, more especially a cellulose-C₁-C₄-alkanoate, such as cellulose butyrate, -propionate and/or - acetate, such as especially CAP (cellulose acetopropionate), cellulose triacetate butyrate or TAC (cellulose triacetate or "triacetyl-cellulose"). In addition, a white or silver pigment and optionally a plasticizer and yet optionally one or more further additives may be present.

Preferably the basis material has the properties as described above.
(h) The invention, in yet another embodiment, relates to the use according to the first embodiment of the invention or any one or more of paragraphs (a) to (g) above, where the solvent cast manufactured film has a cellulose triacetate, cellulose triacetate butyrate and/or cellulose triacetate propionate basis material.
(i) In a particular embodiment, the invention relates to the use according to the first embodiment or any one or more of paragraphs (1) to (h) above where the solvent cast manufactured film (reflector sheet) has no UV coating.
(j) Another embodiment of the invention relates to the second embodiment of the invention above, that is, a Liquid Crystal Display comprising as light reflector a film as defined in the first embodiment or any one or more of the preceding paragraphs (a) to (i), in particular together with other component parts in appropriate bonding and sequence, such as light sources, light guides, diffusors, diffuser plates, polarization recycling films, films with appropriate refractory indices, or the like, and LCD cells.

Preferred is an LCD display with a backlight unit with one or more lateral light sources, e.g. in the form of a Super Slim LCD Design with Light Emitting Diodes (LED) instead of CCFL as light source , e.g. as shown in Fig. 1.

(k) Yet another embodiment of the invention relates to a backlight system especially for an LCD display, comprising a film as defined in the first embodiment of the invention or any one or more of paragraphs (a) to (i) above, and a lights source the light of which is reflected diffusely by said film, especially a three-dimensional or two-dimensional (plane) light source on one side of which the film is attached (an edge light system). Examples of backlight units can be derived from Fig. 1 (a possible edge light system), or alternatively Figs.4 a), 4 b), 4 c) and 4 d).
(I) The invention, in yet a further embodiment, refers to a solvent-cast manufactured reflector sheet, comprising a white or silver pigment, or a mixture thereof, especially in an amount as indicated above, and at least one plasticizer, and optionally one or more further additives.

### Examples:

The following Examples illustrate the invention without limiting the scope thereof.

### Example 1: Production of cast film from Cellulosetriacetate - thickness 190 µm

Starting from 1'282 kg solvent (dichloromethan:methanol 9:1 vol%), 115 kg TiO₂ pigment (Kronos TiO₂ type 2220, Kronos Titan GmbH, Leverkusen, Germany), 239.4 kg cellulosetriacetate (Eastman CA 435 40S esterification percentage **61,1;** Eastman Chemical B.V., Capelle aan den Ijssel, Netherlands), and 26,6 kg triphenylphosphate (TPP) (Lanxess Disflamoll® TP; Lanxess Deutschland GmbH, Leverkusen, Germany), a homogenous solution was produced under mixing and several cooling and heating steps. This solution (lacquer) is called dope. The dope was heated up to 40°C for degassing.

The solid content is between 22.9 % by weight, the relative amount of TiO₂ based on the solids content only (and thus in the final film) is 30 %.

The dope was filtrated with several filters made of cotton fibrous web with a pore size below 60 µm. Further, the filtrated dope was brought to a temperature of 30°C and pumped through a dope hopper into the casting line. At the casting line, the dope was coated on a endless stainless steal matt surface. The thickness of the coating was approx. 830 µm. The coating speed was approx. 1 m/min. The width of the coating was approx. 1400 mm.

The temperature for the drying at the stainless steel surface was between 10°C and 40°C. After the first drying step the film released from the surface. In a second drying step the film was heated up to approx. 100°C. After this second drying step the residual solvent was estimated between 1% and 6%. The residual solvent content of the film was after a further drying step at approx. 110°C below 1 %.

The resulting film has a matte surface on the side where it was previously in contact with the stainless steel matte surface and a glossy (smoother) side.

### Example 2: Production of cast film from Cellulosetriacetate - thickness 190 µm

From 1'282 kg solvent (dichloromethan:methanol 9:1 vol%), 75 kg TiO₂ pigment, 239.4 kg cellulose triacetate, 26.6 kg TPP a homogenous solution was produced under mixing and several cooling and heating steps. This solution (lacquer) is called dope. The dope was heated up to 40°C for degassing.

The solid content is 21.0 % by weight, the relative amount of TiO₂ based on the solids content only (and thus in the final film) is 22 %.

The dope was filtrated with several filters with a pore size below 60 µm. Further, the filtrated dope was brought to a temperature of 30°C and pumped through a pipe to the casting line. At the casting line, the dope was coated on a endless stainless steal matt surface. The thickness of the coating was approx. 830 µm. The coating speed was approx. 1 m/min. The width of the coating was approx. 1400 mm.

The temperature for the drying at the stainless steel surface was between 10°C and 40°C. After the first drying step the film released from the surface. In a second drying step the film was heated up to approx. 100°C. After this second drying step the residual solvent was estimated between 1% and 6%. The residual solvent content of the film was after a further drying step at approx. 110°C below 1 %.

The resulting film has a matte surface on the side where it was previously in contact with the stainless steel matte surface and a glossy (smoother) side.

### Example 3: Measuring of the reflectance:

The reflectance of the films of Examples 1 and 2 are tested for reflectance.

As the reflectance is depending on the thickness of the materials used, a comparison film of appropriate thickness is compared below.

The test method for measuring the reflectance employed is as follows:

Using a Hitachi U4100 spectrometer (Hitachi Europe Ltd, Maidenhead, GB), the reflectance was measured.

There are two types of reflection: Incident light reflected symmetrically with respect to the normal line is called "specular reflection", while incident light scattered in different directions is called "diffuse reflection". When light is directed at an angle of 0°, specular reflected lights exits the integration sphere and is not detected. As a result, only diffuse reflected light is measured. Models of integrating spheres with different angles of incidence are available, enabling measurement of both specular and diffuse reflected light. The measured reflectance is a relative reflectance of sample compared to a standard white sheet made of BaSO₄ (available with Hitachi U41 00).

Using the Hitachi U4100, the incident light angle on a reflective sample was set to 10° on both standard and reference sides. Measurement was performed by placing the sample in front of the incident light window, and concentrating the light reflected from the sample using a 60 mm sphere with a barium sulfate-coated inside. The obtained value was the relative reflectance with respect to the reflectance of the reference standard BaSO₄ which was taken to be 100 %.

Generally, films according to the invention (e.g. as described in Examples 1 and 2) have a very good reflectance over 95% at the matt surface. The thickness of the final film was approx. 190 µm with a very smooth surface.

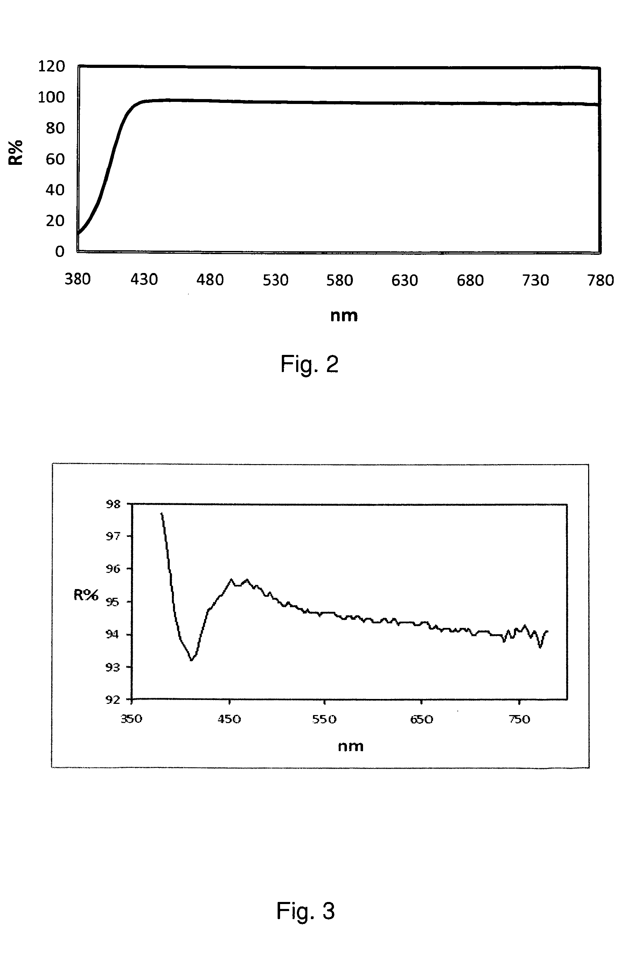

As Example, Fig. 2 shows the reflectance for the film of Example 1

For example, at a wavelength of 550 nm, the reflectance of a film according to Example 1 is 97.3 %.

The reflectance is practically identical on the glossy and the matte side at 10° measurement angle.

For comparison purposes, the commercially available PET film from Toray Industries Inc., Tokyo, Japan, named Lumirror® E60L , having a thickness of 188 µm was also tested (see Fig. 3). For example, the reflectance found here is 94.7%.

It can be seen conveniently that the new material shows very good reflectance over the whole range required without any disturbing negative peaks.

| | **E60L** | **Example 1** |
|---|---|---|
| 450 um | 95,6 | 98,1 |
| 550 um | 94,7 | 97,3 |
| 650 um | 94,4 | 96,9 |

### Example 4: Measurement of the dimensional stability of films according to the Invention

A film according to Example 1 was used to determine the dimensional stability..

To measure the heat shrinkage (dimensional stability) the film was conditioned at 23°C +/-2°C and 50% +/-10% humidity about 1 h. After the conditioning the size of the sample was measured with a measure microscope Hitec CZW1. The next conditioning was at 120°C about 24 h. After that a final conditioning at 23°C +/- 2°C and 50% +/-10% humidity about 1 h to measure the final size of the sample also with Hitec CZW1 (HITECH Messtechnik GmbH, Leonberg, Germany).

The shrinkage was about 0,40% (MD) and 0,31 % (TD).

The films according to the Examples and according to the invention in general, as they are solvent-cast, are highly isotropic with identical mechanical properties in machine direction (MD) and transversal direction (TD).

## Claims

1. The use of a solvent-cast manufactured film as reflector used in a surface light source in the form of a back light unit for a liquid crystal display (LCD).

2. The use according to claim 1 where the solvent-cast manufactured film is equipped to allow for distribution of light from a back light source by diffuse reflection of light.

3. The use according to any one of claims 1 or 2, where the solvent-cast manufactured film comprises one or more of a silver pigment, a white pigment, a fluorescent dye or pigment and/or voids allowing for the diffuse reflection of light.

4. The use according to any one of claims 1 to 3 where the solvent-cast manufactured film comprises a silver or white pigment in particle form, preferably in an amount of from about 3 to 39.5 weight-%.

5. The use according to claim 4, where the pigment is titanium dioxide in particle form.

6. The use according to any one of the preceding claims, where the solvent-cast manufactured film is not oriented axially after the manufacture of the film by solvent-casting and peeling of the film from a substrate on which the solvent-casting takes place.

7. The use according to any one of the preceding claims where light is applied by a back light source in the form of a side or edge light source.

8. The use according to any one of the preceding claims where the solvent-cast manufactured film is a film comprising as basis material acyl-cellulose.

9. The use according to any one of the preceding claims wherein the solvent-cast manufactured film is a cellulose-tri-C₁-C₇-alkanoate.

10. The use according to any one of the preceding claims, wherein the solvent-cast manufactured film has, as basis material, cellulose acetopropionate, cellulose acetate- butyrate or cellulose triacetate, or a mixture thereof.

11. The use according to any one of the preceding claims where the solvent-cast manufactured film has no UV radiation absorbing coating.

12. A Liquid Crystal Display comprising as light reflector a solvent-cast manufactured film as defined in any one of claims 1 to 11.

13. A backlight system, comprising as light reflector a solvent-cast manufactured film as defined in any one of claims 1 to 11.

14. A solvent-cast manufactured reflector film comprising a white or silver pigment, or a mixture thereof, as described in any one of claims 1 to 11.

15. A process for the manufacture of a backlight unit, comprising forming a film by solvent casting with a solution comprising the basis material, one or more pigments and if desired one or more further additives, such as plasticizers, and then using the film and other components required to manufacture the backlight unit.
